# EUROPEAN PATENT APPLICATION

(11) **EP 4 557 812 A1**
(43) Date of publication of application: **21.05.2025**
(21) Application number: 23849267.2
(22) Date of filing: 27.07.2023
(51) Int. Cl.: H04W 24/08, H04W 24/02, H04W 76/28

(54) **RESOURCE CONTROL METHOD, TERMINAL, AND ELECTRONIC DEVICE**

(30) Priority: 01.08.2022 CN 202210917095
(71) Applicant: Vivo Mobile Communication Co., Ltd., Dongguan, Guangdong 523863 (CN)
(72) Inventor: LIU, Jitai, Dongguan, Guangdong 523863 (CN)
(74) Representative: Murgitroyd & Company
(86) International application number: PCT/CN2023/109618
(87) International publication number: WO 2024/027559

(57) **Abstract**

This application discloses a resource control method, a terminal, and an electronic device, which relates to the field of communication technologies. The method includes: in a case that a terminal is in a discontinuous reception DRX connection manner, evaluating cell quality of a first cell and obtaining a first evaluation result, where the first cell is a cell in which the terminal is currently located; and determining first timing duration of a first timer based on the first evaluation result, where the terminal monitors retransmission feedback information within the first timing duration; and the first timing duration is determined based on the first evaluation result.

## Description

### CROSS-REFERENCE TO RELATED APPLICATIONS

This application claims the priority of Chinese Patent Application No. 202210917095.8 filed in China on August 1, 2022, which is incorporated herein by reference in its entirety.

### TECHNICAL FIELD

This application relates to the field of communication technologies, and specifically, to a resource control method, a terminal, and an electronic device.

### BACKGROUND

With rapid development of a network technologies, 5G networks (5^{th} generation mobile networks) corresponding to a new radio (New Radio, NR) technology have become very common. Due to widespread use of 5G networks, 5G terminals are correspondingly changed and optimized. Reducing power consumption of the terminals in the 5G networks has become one of the important optimization content of the 5G terminals.

Through comparison, the NR technology and a long term evolution (Long Term Evolution, LTE) technology are substantially consistent in downlink network transmission, and greatly differ in uplink network transmission. A reason is that a hybrid automatic repeat request (Hybrid Automatic Repeat reQuest, HARQ) mechanism of the NR technology is different from that of the LTE technology. NR uses asynchronous HARQ for both an uplink and a downlink, while LTE uses synchronous HARQ for an uplink and asynchronous HARQ for a downlink. In the NR, no dedicated HARQ acknowledgement/negative acknowledgement (Acknowledge ACK/Negative Acknowledgement, ACK/NACK) character is set to make a response indicating whether uplink data transmission succeeds. A terminal only needs to monitor uplink authorization for retransmission delivered by a base station (gNB) within a period of time. If no corresponding instruction delivered by the gNB is received during the monitoring, it is assumed by default that uplink data is successfully sent. In the NR, time for a drx-downlink retransmission timer (drx-Retransmission Timer DL) is set to reduce wake-up time of the terminal.

However, regardless of a transmission state, the terminal needs to be woken up once every period of time. Therefore, the terminal needs to consume some resources regularly in any transmission state, resulting in a waste of transmission resources and power consumption.

### SUMMARY

An objective of embodiments of this application is to provide a resource control method, a terminal, and an electronic device, which can resolve a problem that a terminal needs to consume some resources regularly in any transmission state, resulting in a waste of transmission resources and power consumption.

According to a first aspect, an embodiment of this application provides a resource control method, including: in a case that a terminal is in a discontinuous reception DRX connection manner, evaluating cell quality of a first cell and obtaining a first evaluation result, where the first cell is a cell in which the terminal is currently located; and determining first timing duration of a first timer based on the first evaluation result, where the terminal monitors retransmission feedback information within the first timing duration; and the first timing duration is determined based on the first evaluation result.

According to a second aspect, an embodiment of this application provides a resource control apparatus, including an execution module and a determining module, where the execution module is configured to, in a case that a terminal is in a discontinuous reception DRX connection manner, evaluate cell quality of a first cell, and obtain a first evaluation result, where the first cell is a cell in which the terminal is currently located; and the determining module is configured to determine first timing duration of a first timer based on the first evaluation result received by the execution module, where the terminal monitors retransmission feedback information within the first timing duration; and the first timing duration is determined based on the first evaluation result.

According to a third aspect, an embodiment of this application provides an electronic device, including a processor and a memory, where the memory stores a program or instructions runnable on the processor, and when the program or the instructions are executed by the processor, the steps of the method according to the first aspect are implemented.

According to a fourth aspect, an embodiment of this application provides a readable storage medium, storing a program or instructions, where when the program or the instructions are executed by a processor, the steps of the method according to the first aspect are implemented.

According to a fifth aspect, an embodiment of this application provides a chip, including a processor and a communication interface, where the communication interface is coupled to the processor, and the processor is configured to run a program or instructions to implement the method according to the first aspect.

According to a sixth aspect, an embodiment of this application provides a computer program product, where the program product is stored in a storage medium, and the program product is executed by at least one processor to implement the method according to the first aspect.

In the embodiments of this application, in a case that the terminal is in the discontinuous reception DRX connection manner, the cell quality of the cell in which the terminal is currently located, namely, the first cell, may be evaluated, to obtain the first evaluation result, and then duration, namely, the first timing duration, for monitoring the retransmission feedback information is determined based on the first evaluation result. In this way, the terminal may determine the first timing duration for monitoring the retransmission feedback information based on an actual status of communication quality of the cell, so that in a case that the cell quality is good, monitoring is performed within short first timing duration, thereby saving monitoring resources to the greatest extent while ensuring monitoring quality.

### BRIEF DESCRIPTION OF THE DRAWINGS

FIG. 1 is a schematic flowchart of a resource control method according to an embodiment of this application;
FIG. 2 is a schematic diagram of a structure of a resource control apparatus according to an embodiment of this application;
FIG. 3 is a schematic diagram 1 of a structure of an electronic device according to an embodiment of this application; and
FIG. 4 is a schematic diagram 2 of a structure of an electronic device according to an embodiment of this application.

### DETAILED DESCRIPTION

The following clearly describes technical solutions in the embodiments of this application with reference to the accompanying drawings in the embodiments of this application. Apparently, the described embodiments are some of the embodiments of this application rather than all of the embodiments. All other embodiments derived by a person of ordinary skill in the art based on the embodiments of this application shall fall within the protection scope of this application.

In the specification and claims of this application, the terms "first", "second", and the like are used to distinguish similar objects, but are not used to describe a specific sequence or order. It should be understood that the terms used in such a way are interchangeable in proper circumstances, so that the embodiments of this application can be implemented in other sequences than the sequences illustrated or described herein, and the objects distinguished through "first", "second", and the like are generally of a same type and a quantity of objects are not limited, for example, a first object may be one or more than one. In addition, "and/or" in this specification and the claims represents at least one of the connected objects, and a character "/" used herein generally indicates an "or" relationship between associated objects.

A resource control method according to the embodiments of this application is described in detail below with reference to the accompany drawings through specific embodiments and application scenarios thereof.

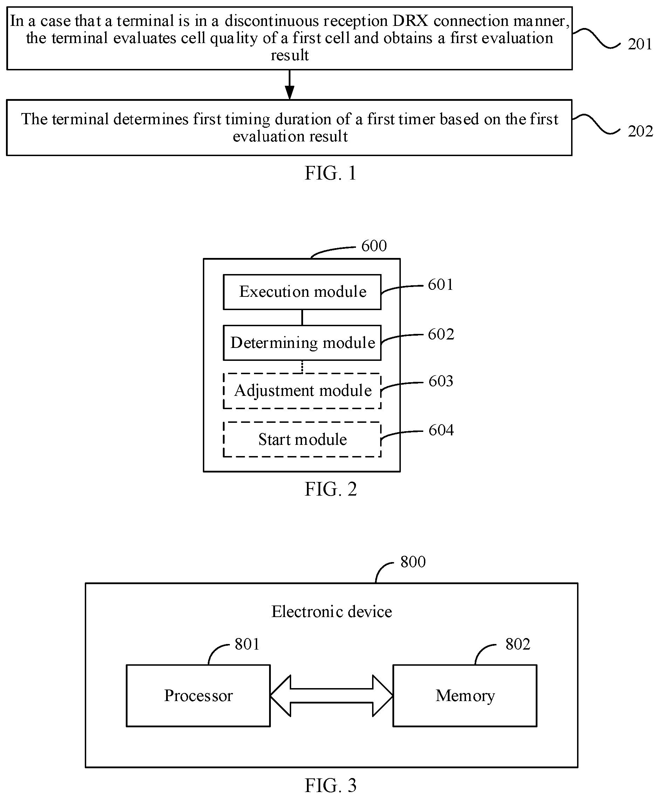

An embodiment provides a resource control method. As shown in FIG. 1, the resource control method is applied to a terminal, and includes the following step 201 and step 202.

Step 201: In a case that the terminal is in a discontinuous reception DRX connection manner, the terminal evaluates cell quality of a first cell and obtains a first evaluation result.

In this embodiment of this application, the first cell is a cell in which the terminal is currently located.

In this embodiment of this application, the discontinuous reception DRX connection manner may be connected-discontinuous reception (Connected-Discontinuous Reception, CDRX). The CDRX is a terminal connection manner in a 5G network.

In this embodiment of this application, an evaluation manner in which the terminal evaluates the cell quality of the first cell may be customized, or may be preset. This is not limited in the embodiments of this application.

In this embodiment of this application, that the terminal evaluates cell quality of a first cell may be evaluating signal quality of the cell. The signal quality may include at least one of the following: signal strength of a reference signal receiving power (Reference Signal Receiving Power, RSRP), and a signal to interference plus noise ratio (Signal to Interference plus Noise Ratio, SINR).

In an embodiment, the evaluation manner in which the terminal evaluates the cell quality of the first cell may be determined according to a relative test requirement. Example 1: The cell quality of the first cell may be evaluated in a manner shown in Table 1 below.

**Table 1**

| | | | | | | |
|---|---|---|---|---|---|---|
| Signal strength of an RSRP (dBm) | Parameter interval | < -114 | -114 to - 105 | -104 to -95 | -94 to -85 | > -85 |
| | Description | Extremely weak | Weak | Normal | Strong | Excellent |
| SINR signal-to-noise ratio (dB) | Parameter interval | <3 | 3 to 10 | 11 to 15 | 16 to 25 | > 25 |
| | Description | Extremely poor | Weak | Normal | Strong | Excellent |

Further, the cell quality may be classified into three types based on the parameters specified in Table 1.

Type 1: High-quality cell, requiring that RSRP > -100 dBm, SINR > 10 dB, and pathloss (pathloss) < 105 dB.

Type 2: Medium cell, requiring that SINR > 10 dB and RSRP > -100 dBm or pathloss < 105 dB.

Type 3: Normal cell. Any cell that does not satisfy the foregoing two cases is classified as a normal cell.

In this embodiment of this application, the first evaluation result may be an evaluation result of cell quality, for example, may be the high-quality cell, medium cell, or normal cell described in Example 1.

Step 202: The terminal determines first timing duration of a first timer based on the first evaluation result.

In this embodiment of this application, the terminal monitors retransmission feedback information within the first timing duration; and the first timing duration is determined based on the first evaluation result.

In this embodiment of this application, the retransmission feedback information may be a NACK.

In an embodiment, the retransmission feedback information detected by the terminal may be a NACK received by the terminal through a radio link control (Radio Link Control, RLC) protocol layer.

In this embodiment of this application, after the terminal determines the first evaluation result, the terminal may immediately determine the first timing duration currently corresponding to the first evaluation result based on the first evaluation result.

In this embodiment of this application, the first timing duration may be monitoring duration determined by the first timer based on the current first evaluation result. The first timer may be a drx-downlink retransmission timer (drx-Retransmission Timer DL).

It is to be noted that, before the terminal determines the first timing duration, the first timing duration may be fourth timing duration. The fourth timing duration may be the same as the first timing duration or may be different from the first timing duration. The fourth timing duration is autonomously delivered by a network side device (for example, an RRC configuration of a base station).

Example 2: With reference to content in the foregoing Table 1 and Example 1, after the first evaluation result corresponding to the cell quality of the first cell is determined, the first timing duration corresponding to the first evaluation result may be determined. If an evaluation result of the first cell is the high-quality cell, the terminal sleeps during the drx-Retransmission Timer DL, in other words, a value of the drx-Retransmission Timer DL is 0. If the evaluation result of the first cell is the medium cell, the value (namely, the first timing duration) of the drx-Retransmission Timer DL is halved relative to the previous fourth timing duration. In other words, the terminal monitors for only half the time. If the evaluation result of the first cell is the normal cell, the terminal remains in a wake-up and monitoring state during the drx-Retransmission Timer DL. In other words, the value of the drx-Retransmission Timer DL remains unchanged.

In the embodiments of this application, in a case that the terminal is in the discontinuous reception DRX connection manner, the cell quality of the cell in which the terminal is currently located, namely, the first cell, may be evaluated, to obtain the first evaluation result, and then duration, namely, the first timing duration, for monitoring the retransmission feedback information is determined based on the first evaluation result. In this way, the terminal may determine the first timing duration for monitoring the retransmission feedback information based on an actual status of communication quality of the cell, so that in a case that the cell quality is good, monitoring is performed within short first timing duration, thereby saving monitoring resources to the greatest extent while ensuring monitoring quality.

Optionally, in this embodiment of this application, after step 202, the resource control method provided in this embodiment of this application further includes the following step A.

Step A: In a case that the retransmission feedback information is detected within the first timing duration of the first timer, the terminal adjusts the first timing duration to second timing duration.

For example, the second timing duration is greater than the first timing duration.

It may be understood that, in a case that the terminal detects the retransmission feedback information within the first timing duration, the terminal may consider that the quality of the current cell declines, so that the first timing duration may be adjusted based on an event that the retransmission feedback information is detected.

In an embodiment, a manner of adjusting the first timing duration to the second timing duration is that, the terminal lowers the quality of the first cell by one level after detecting the retransmission feedback information within any first timing duration, in other words, the terminal lowers the quality of the first cell level by level until the quality of the first cell is lowered to the lowest level, and the first timing duration is correspondingly adjusted to the second timing duration corresponding to current quality of the first cell.

Example 3: With reference to Example 1 and Example 2, it is assumed that in a case that the terminal is in a CDRX connection manner, the terminal evaluates the cell quality of the first cell, obtains the first evaluation result, and determines that the first cell is the high-quality cell. In this way, it may be determined that in this case, the terminal may sleep during the drx-Retransmission Timer DL, in other words, the value of the drx-Retransmission Timer DL is 0 (namely, the first timing duration). Subsequently, after the terminal receives the feedback information, namely, the NACK, through the RLC layer, it means that the cell quality of the first cell in which the current terminal is located has changed. According to a preset rule, the cell quality of the first cell is lowered by one level, and the first cell is changed from the high-quality cell to the medium cell, so that the value of the drx-Retransmission Timer DL is changed from the previous first timing duration to half duration (namely, the second timing duration) of monitoring an entire transmission process.

In this way, in a case that the retransmission feedback information is detected within the first timing duration of the first timer, the first timing duration is adjusted to the second timing duration, and the second timing duration is greater than the first timing duration. In this way, in a case that the retransmission feedback information is detected within the first timing duration, the first timing duration is adjusted to the second timing duration in time, so that monitoring quality can be ensured while monitoring resources are saved for the terminal.

Optionally, in this embodiment of this application, before the cell quality of the first cell is evaluated in step 201, the resource control method provided in this embodiment of this application further includes the following step B.

Step B: The terminal determines third timing duration of a second timer based on a target parameter.

For example, the third timing duration is a period length of an evaluation period for quality evaluation of the first cell by the terminal.

For example, the third timing duration is a time period for cell quality evaluation by the terminal.

For example, the third timing duration of the second timer may be preset by a network device, or may be customized by the terminal according to a protocol.

In an example, in a case that the third timing duration of the second timer is customized by the terminal according to the protocol, the terminal may determine the third timing duration based on a current state of the terminal or an environment in which the terminal is located. For details, refer to the following descriptions.

It is to be noted that, a timing step of starting the first timer to time the first timing duration occurs within the third timing duration. Specifically, a manner of starting timing the first timing duration is that, data is transmitted within the third timing duration, and when data starts to be transmitted, the first timing duration starts to be timed. For example, it is assumed that the third timing duration is 1 s, and the first timing duration is 15 ms. In this case, data starts to be transmitted once 17 ms after the third timing duration is started. In this case, the first timing duration starts to be timed when data starts to be transmitted, and within the first timing duration, the terminal monitors whether the retransmission feedback information exists. Further, generally, the third timing duration is used as only a timing period. During actual application, the third timing duration may be continuously timed uninterruptedly (for example, there is no time interval between the first third timing duration and the second third timing duration).

For example, the third timing duration may correspond to an actual state of the terminal or an environment in which the terminal is located. When the actual state of the terminal or the environment in which the terminal is located varies, the third timing duration is correspondingly changed. For example, when the environment changes, timing duration is updated from the third timing duration to fifth timing duration.

For example, the target parameter includes any one of the following: the motion state of the terminal, the quantity of times of reselecting the first cell by the terminal, and the environmental evaluation result of the terminal.

For example, the environmental evaluation result includes a static environment and a dynamic environment.

For example, in a case that the target parameter is the motion state of the terminal, the terminal may determine the motion state of the terminal based on a sensor or a positioning module (for example, a GPS positioning module/Beidou module), thereby determining a current scenario in which the terminal is located. The motion state of the terminal is a dynamic state (or a micro-dynamic state) or a static state.

For example, when the target parameter includes the environmental evaluation result of the terminal, the current scenario in which the terminal is located may be determined based on an indoor environment or an outdoor environment in which the terminal is located. Generally, when the terminal is located in the indoor environment, it may be considered that the terminal is located in the static environment, so that the terminal is in the static state; and when the terminal is located in the outdoor environment, it may be considered that the terminal is located in the dynamic environment, so that the terminal is in the dynamic state (or the micro-dynamic state).

For example, when the target parameter is the quantity of times of reselecting the first cell by the terminal, the terminal may determine a state of the terminal based on a quantity of times of reselecting a cell within duration in a predetermined protocol (for example, the protocol TS38.304). The state of the terminal is the dynamic state (or the micro-dynamic state) or the static state.

In an embodiment, when the terminal is in the static state, the third timing duration of the second timer may be set as: T_{indoor_eval} = 48 short discontinuous reception cycles (drx-ShortCycle) or 6 long discontinuous reception cycles (drx-LongCycle). It may be understood that, in a case that the terminal is in the static state, the environment does not change much, the third timing duration may be long, and a set time conversion result is specifically about 1 s. The third timing duration is to be configured in drx-Config in an NR rrc Reconfiguration message delivered by the network side device.

In an embodiment, in a case that the terminal is in the dynamic state (or the micro-dynamic state), the terminal is in the micro-dynamic/dynamic state within the third timing duration. In this case, the third timing duration is set as: T_{outdoor_eval} = 24 drx-Short Cycles. It may be understood that, in a case that the terminal is in the dynamic state, the environment may change greatly, which may cause a channel status of the cell in which the terminal is located to change. Therefore, the third timing duration within which the terminal is in the dynamic state is half the third timing duration within which the terminal is in the static state. In this way, an evaluation frequency is improved, and the set time conversion result is specifically about 0.5 s.

In this way, by obtaining the third timing duration of the second timer, the period length of the evaluation period for quality evaluation of the first cell by the terminal may be correspondingly determined, so that the cell quality of the first cell may be determined based on the third timing duration. In this way, the retransmission feedback information may be subsequently monitored based on the first timing duration satisfying the cell quality, and the monitoring resources are saved for the terminal.

Optionally, in this embodiment of this application, after the cell quality of the first cell is evaluated and the first evaluation result is obtained in step 201, the resource control method provided in this embodiment of this application further includes the following step C1 and step C2.

Step C1: The terminal starts the second timer based on the first timing duration and the third timing duration.

Step C2: The terminal starts the first timer at a moment when the terminal detects within the third timing duration that data starts to be transmitted, and monitors the retransmission feedback information within the first timing duration.

Optionally, in this embodiment of this application, after step 201, the resource control method provided in this embodiment of this application further includes the following step D1 to step D3.

Step D1: The terminal reevaluates timing duration of a second timer after it is detected that the second timer times out.

Step D2: The terminal reevaluates the cell quality of the first cell.

Step D3: The terminal redetermines timing duration of the first timer.

For example, the third timing duration is a period length of an evaluation period for quality evaluation of the first cell by the terminal, and the third timing duration is a time period for cell quality evaluation by the terminal.

For example, the target parameter includes any one of the following: the motion state of the terminal, the quantity of times of reselecting the first cell by the terminal, and the environmental evaluation result of the terminal.

For example, for the target parameter, the motion state of the terminal, the quantity of times of reselecting the first cell by the terminal, and the environmental evaluation result of the terminal, refer to the foregoing descriptions. Details are not described herein again.

For example, that the second timer times out means that the terminal fails to reevaluate the timing duration of the second timer after the third timing duration corresponding to the second timer, and the failure to perform reevaluation is a result corresponding to the timing out of the second timer.

In an example, after it is detected that the second timer times out, the terminal re-obtains the timing duration of the second timer, then evaluates the cell quality of the first cell again, to obtain a third evaluation result, and determines the timing duration of the first timer based on the third evaluation result.

It may be understood that, that the terminal times out at the second timer may exceed T_{inside_eval} or T_{indoor_eval}. In other words, the second timer needs to be reevaluated each time when the second timer exceeds previously set timing duration.

For example, the third evaluation result may be the same as or different from the first evaluation result, or may be the same as or different from the second evaluation result.

It is to be noted that:
First, in a case that it is detected that the second timer times out, it may be further simultaneously detected that the terminal receives the retransmission feedback information. In this case, a process of step D1 and step D2 is also performed, where the first timing duration is adjusted to the second timing duration. For details, refer to relative descriptions of step A.
Second, a communication strategy corresponding to the first timer belongs to a high-level communication strategy, and a communication strategy of the second timer belongs to a low-level communication strategy. Therefore, the terminal may first reevaluate the timing duration of the second timer, and then redetermine the timing duration of the first timer according to step A. This can ensure that timing duration is ultimately determined through the high-level communication strategy, and the determined timing duration is more applicable.

In this way, in a case that it is detected that the second timer times out, the terminal may reevaluate the duration of the second timer and the cell quality in time, thereby subsequently obtaining the first timing duration satisfying the cell quality and the timing duration of the second timer in time, thereby ensuring the monitoring quality.

Optionally, in this embodiment of this application, after step 202, the resource control method provided in this embodiment of this application further includes the following step E.

Step E: In a case that it is detected that the terminal is switched from the first cell to a second cell, the terminal reevaluates cell quality of the second cell, to obtain a second evaluation result, and redetermines timing duration of the first timer based on the second evaluation result.

For example, the first cell is different from the second cell.

It is to be noted that, in a whole process of step 201 and the step 202, the terminal monitors the event of cell switching of the terminal. It may be understood that, that the first cell is switched to the second cell may mean that the cell quality is changed. Therefore, the terminal needs to perform step 201 and step 202 again.

For example, the second evaluation result may be consistent with the first evaluation result, or may be inconsistent with the first evaluation result. Correspondingly, the timing duration of the first timer determined based on the second evaluation result may be consistent with the first timing duration, or may be inconsistent with the first timing duration.

In this way, through monitoring a whole process of cell switching of the terminal, in a case that the terminal switches a cell, the case is detected in time and the cell quality is reevaluated in time, so that the timing duration of the first timer satisfying quality of the second cell is obtained in time, so that the monitoring quality can be ensured.

The resource control method provided in this embodiment of this application may be performed by a resource control apparatus. In an embodiment of this application, that a resource control apparatus performs the resource control method is used as an example for description of the resource control apparatus according to this embodiment of this application.

FIG. 2 is a possible schematic diagram of a structure for implementing a resource control apparatus according to an embodiment of this application.

As shown in FIG. 2, the apparatus 600 includes an execution module 601 and a determining module 602, where the execution module 601 is configured to, in a case that a terminal is in a discontinuous reception DRX connection manner, evaluate cell quality of a first cell and obtain a first evaluation result, where the first cell is a cell in which the terminal is currently located; and the determining module 602 is configured to determine first timing duration of a first timer based on the first evaluation result received by the execution module 601, where the terminal monitors retransmission feedback information within the first timing duration; and the first timing duration is determined based on the first evaluation result.

In the resource control apparatus in this embodiment of this application, in a case that the resource control apparatus is in the discontinuous reception DRX connection manner, the cell quality of the cell, namely, the first cell, in which the apparatus is currently located, may be evaluated, to obtain the first evaluation result, and then duration, namely, the first timing duration, for monitoring the retransmission feedback information is determined based on the first evaluation result. In this way, the resource control apparatus may determine the first timing duration for monitoring the retransmission feedback information based on an actual status of communication quality of the cell, so that in a case that the cell quality is good, monitoring is performed within short first timing duration, thereby saving monitoring resources to the greatest extent while ensuring monitoring quality.

Optionally, the apparatus 600 further includes an adjustment module 603, where the adjustment module 603 is configured to, in a case that the retransmission feedback information is detected within the first timing duration of the first timer, adjust the first timing duration determined by the determining module 602 to second timing duration, where the second timing duration is greater than the first timing duration.

Optionally, the determining module 602 is further configured to determine third timing duration of a second timer based on a target parameter, where the third timing duration is a period length of an evaluation period for quality evaluation of the first cell by the terminal, and the third timing duration is a time period for cell quality evaluation by the terminal; and the target parameter includes any one of the following: a motion state of the terminal, a quantity of times of reselecting the first cell by the terminal, and an environmental evaluation result of the terminal.

Optionally, the apparatus 600 further includes a start module 604, where the start module 604 is configured to start the second timer based on the first timing duration of the first timer and the third timing duration; and the start module 604 is further configured to start the first timer at a moment when the terminal detects within the third timing duration that data starts to be transmitted, and monitor the retransmission feedback information within the first timing duration.

Optionally, the execution module 601 is further configured to reevaluate timing duration of the second timer after it is detected that the second timer times out; the execution module 601 is further configured to reevaluate the cell quality of the first cell; and the execution module 601 is further configured to redetermine timing duration of the first timer, where the third timing duration is a period length of an evaluation period for quality evaluation of the first cell by the terminal, and the third timing duration is a time period for cell quality evaluation by the terminal; and the target parameter includes any one of the following: the motion state of the terminal, the quantity of times of reselecting the first cell by the terminal, and the environmental evaluation result of the terminal.

Optionally, the execution module 601 is configured to, in a case that it is detected that the terminal is switched from the first cell to a second cell, reevaluate cell quality of the second cell, to obtain a second evaluation result, and determine timing duration of the first timer based on the second evaluation result.

It is to be noted that, as shown in FIG. 2, a module, for example, the execution module 601, necessarily included in the resource control apparatus 600 is shown in a solid-line box; and a module, for example, the adjustment module 603, that may or may not be included in the resource control apparatus 600 is shown in a dashed-line box.

The resource control apparatus in this embodiment of this application may be an electronic device, or may be a component, for example, an integrated circuit or a chip, in an electronic device. The electronic device may be a terminal or another device, or may be another device other than a terminal. For example, the electronic device may be a mobile phone, a tablet computer, a notebook computer, a palm computer, an in-vehicle electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or the like, and may alternatively be a server, a network attached storage (Network Attached Storage, NAS), a personal computer (personal computer, PC), a television (television, TV), a teller machine, a self-service machine, or the like. This is not specifically limited in this embodiment of this application.

The resource control apparatus in this embodiment of this application may be an apparatus with an operating system. The operating system may be an Android (Android) operating system, an ios operating system, or another possible operating system, which is not specifically limited in this embodiment of this application.

The resource control apparatus according to this embodiment of this application can implement all processes of the method embodiments shown in FIG. 1, and details are not described herein again to avoid repetition.

Optionally, as shown in FIG. 3, an embodiment of this application further provides an electronic device 800, including a processor 801 and a memory 802. The memory 802 stores a program or instructions runnable on the processor 801, and when the program or the instructions are executed by the processor 801, each step of the foregoing resource control method embodiments is implemented, and the same technical effects can be achieved. To avoid repetition, details are not described herein again.

It is to be noted that, the electronic device in this embodiment of this application includes a mobile electronic device and a non-mobile electronic device.

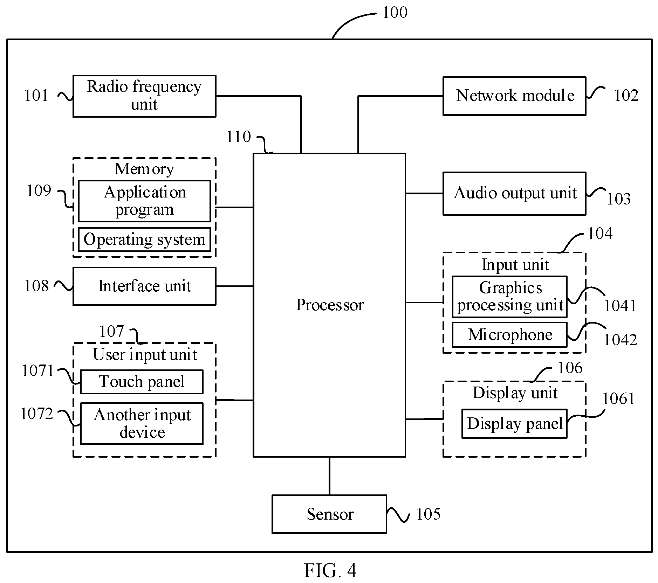

FIG. 4 is a schematic diagram of a hardware structure of an electronic device according to an embodiment of this application.

The electronic device 100 includes, but is not limited to, components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include a power supply (such as a battery) for supplying power to the components. The power supply may be logically connected to the processor 110 by using a power management system, thereby implementing functions such as charging, discharging, and power consumption management by using the power management system. The structure of the electronic device shown in FIG. 4 constitutes no limitation on the electronic device, and the electronic device may include more or fewer components than those shown in the figure, or some components may be combined, or a different component deployment may be used, which are not described herein again.

The processor 110 is configured to, in a case that a terminal is in a discontinuous reception DRX connection manner, evaluate cell quality of a first cell and obtain a first evaluation result, where the first cell is a cell in which the terminal is currently located; and the processor 110 is further configured to determine first timing duration of a first timer based on the first evaluation result, where the terminal monitors retransmission feedback information within the first timing duration; and the first timing duration is determined based on the first evaluation result.

In the electronic device provided in this embodiment of this application, in a case that the electronic device is in the discontinuous reception DRX connection manner, the cell quality of the cell in which the terminal is currently located, namely, the first cell, may be evaluated, to obtain the first evaluation result, and then duration, namely, the first timing duration, for monitoring the retransmission feedback information is determined based on the first evaluation result. In this way, the electronic device may determine the first timing duration for monitoring the retransmission feedback information based on an actual status of communication quality of the cell, so that in a case that the cell quality is good, monitoring is performed within short first timing duration, thereby saving monitoring resources to the greatest extent while ensuring monitoring quality.

In an example, the processor 110 is further configured to, in a case that the retransmission feedback information is detected within the first timing duration of the first timer, adjust the first timing duration to second timing duration, where the second timing duration is greater than the first timing duration.

In an example, the processor 110 is further configured to determine third timing duration of a second timer based on a target parameter, where the third timing duration is a period length of an evaluation period for quality evaluation of the first cell by the terminal, and the third timing duration is a time period for cell quality evaluation by the terminal; and the target parameter includes any one of the following: the motion state of the terminal, the quantity of times of reselecting the first cell by the terminal, and the environmental evaluation result of the terminal.

In an example, the processor 110 is further configured to start the second timer based on the first timing duration and the third timing duration; and start the first timer at a moment when the terminal detects within the third timing duration that data starts to be transmitted, and monitor the retransmission feedback information within the first timing duration.

In an example, the processor 110 is further configured to reevaluate timing duration of the second timer after it is detected that the second timer times out; the processor 110 is further configured to reevaluate the cell quality of the first cell; and the processor 110 is further configured to redetermine timing duration of the first timer, where the third timing duration is a period length of an evaluation period for quality evaluation of the first cell by the terminal, and the third timing duration is a time period for cell quality evaluation by the terminal; and the target parameter includes any one of the following: the motion state of the terminal, the quantity of times of reselecting the first cell by the terminal, and the environmental evaluation result of the terminal.

In an example, the processor 110 is further configured to, in a case that it is detected that the terminal is switched from the first cell to a second cell, reevaluate cell quality of the second cell, to obtain a second evaluation result, and redetermine timing duration of the first timer based on the second evaluation result.

It is to be understood that, in this embodiment of this application, the input unit 104 may include a graphics processing unit (Graphics Processing Unit, GPU) 1041 and a microphone 1042, and the graphics processing unit 1041 processes static pictures or video image data obtained by an image capturing device (such as a camera) in a video capturing mode or an image capturing mode. The display unit 106 may include a display panel 1061, and the display panel 1061 may be configured by using a liquid crystal display, an organic light-emitting diode, or the like. The user input unit 107 includes at least one of a touch panel 1071 and another input device 1072. The touch panel 1071 is also referred to as a touch screen. the touch panel 1071 may include two parts: a touch detection apparatus and a touch controller. The another input device 1072 may include, but is not limited to, a physical keyboard, a functional key (such as a volume control key or a switch key), a track ball, a mouse, and a joystick, which are not described herein again.

The memory 109 may be configured to store a software program and various data. The memory 109 may mainly include a first storage area storing a program or instructions and a second storage area storing data, where the first storage area may store an operating system, an application program or instructions required by at least one function (such as a sound playing function or an image playing function), and the like. In addition, the memory 109 may include a volatile memory or a non-volatile memory. Alternatively, the memory 109 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), or a direct rambus RAM (Direct Rambus RAM, DRRAM). The memory 109 in this embodiment of this application includes, but is not limited to, these memories and any other suitable types of memories.

The processor 110 may include one or more processing units. Optionally, the processor 110 integrates an application processor and a modem processor, where the application processor mainly processes an operation involving the operating system, the user interface, the application program, and the like, and the modem processor, for example, a baseband processor, mainly processes a wireless communication signal. It may be understood that the modem processor may alternatively not be integrated into the processor 110.

An embodiment of this application further provides a readable storage medium, storing a program or instructions, where when the program or the instructions are executed by a processor, each process of the foregoing resource control method embodiments is implemented and the same technical effects can be achieved. Details are not described herein again to avoid repetition.

The foregoing processor is the processor in the electronic device described in the foregoing embodiment. The readable storage medium includes a computer-readable storage medium, for example, a computer read-only memory ROM, a random access memory RAM, a magnetic disk, or an optical disk.

An embodiment of this application additionally provides a chip, including a processor and a communication interface, where the communication interface is coupled to the processor, and the processor is configured to run a program or instructions to implement each process of the foregoing resource control method embodiments, and the same technical effects can be achieved. Details are not described herein again to avoid repetition.

It is to be understood that the chip mentioned in this embodiment of this application may also be referred to as a system-level chip, a system chip, a chip system, a system-on-a-chip chip, or the like.

An embodiment of this application provides a computer program product, where the program product is stored in a storage medium, and the program product is executed by at least one processor to implement each process of the foregoing resource control method embodiments, and the same technical effects can be achieved. Details are not described herein again to avoid repetition.

It is to be noted that, the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the process, method, object, or apparatus. In addition, it is to be noted that, the scope of the method and apparatus in the embodiments of this application is not limited to performing the functions in the order shown or discussed, but may also include performing the functions in a substantially simultaneous manner or in a reverse order according to the functions involved, for example, the described method may be performed in a sequence different from the described order, and various steps may also be added, omitted, or combined. In addition, features described with reference to certain examples may be combined in other examples.

Through the description of the foregoing implementations, a person skilled in the art may clearly understand that the method according to the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disk) and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art can make many forms without departing from the scope of this application and the protection of the claims, all of which fall within the protection of this application.

## Claims

1. A resource control method, applied to a terminal, comprising:
in a case that the terminal is in a discontinuous reception DRX connection manner, evaluating cell quality of a first cell and obtaining a first evaluation result, wherein the first cell is a cell in which the terminal is currently located; and
determining first timing duration of a first timer based on the first evaluation result, wherein
the terminal monitors retransmission feedback information within the first timing duration; and the first timing duration is determined based on the first evaluation result.

2. The method according to claim 1, wherein after the determining first timing duration of a first timer based on the first evaluation result, the method further comprises:
in a case that the retransmission feedback information is detected within the first timing duration of the first timer, adjusting the first timing duration to second timing duration, wherein
the second timing duration is greater than the first timing duration.

3. The method according to claim 1, wherein before the evaluating cell quality of a first cell, the method further comprises:
determining third timing duration of a second timer based on a target parameter, wherein
the third timing duration is a period length of an evaluation period for quality evaluation of the first cell by the terminal, and the third timing duration is a time period for cell quality evaluation by the terminal; and
the target parameter comprises any one of the following: a motion state of the terminal, a quantity of times of reselecting the first cell by the terminal, and an environmental evaluation result of the terminal.

4. The method according to claim 1, wherein after the evaluating cell quality of a first cell and obtaining a first evaluation result, the method further comprises:
starting a second timer based on the first timing duration and third timing duration; and
starting the first timer at a moment when the terminal detects within the third timing duration that data starts to be transmitted, and monitoring the retransmission feedback information within the first timing duration.

5. The method according to claim 1, wherein after the determining first timing duration of a first timer based on the first evaluation result, the method further comprises:
reevaluating timing duration of a second timer after it is detected that the second timer times out;
reevaluating the cell quality of the first cell; and
redetermining timing duration of the first timer, wherein
third timing duration is a period length of an evaluation period for quality evaluation of the first cell by the terminal, and the third timing duration is a time period for cell quality evaluation by the terminal; and
a target parameter comprises any one of the following: a motion state of the terminal, a quantity of times of reselecting the first cell by the terminal, and an environmental evaluation result of the terminal.

6. The method according to claim 1, wherein after the determining first timing duration of a first timer based on the first evaluation result, the method further comprises:
in a case that it is detected that the terminal is switched from the first cell to a second cell, reevaluating cell quality of the second cell, to obtain a second evaluation result, and redetermining timing duration of the first timer based on the second evaluation result.

7. A resource control apparatus, comprising an execution module and a determining module, wherein
the execution module is configured to, in a case that a terminal is in a discontinuous reception DRX connection manner, evaluate cell quality of a first cell and obtain a first evaluation result, wherein the first cell is a cell in which the terminal is currently located; and
the determining module is configured to determine first timing duration of a first timer based on the first evaluation result received by the execution module, wherein
the terminal monitors retransmission feedback information within the first timing duration; and the first timing duration is determined based on the first evaluation result.

8. The apparatus according to claim 7, wherein the apparatus further comprises an adjustment module, wherein
the adjustment module is configured to, in a case that the retransmission feedback information is detected within the first timing duration of the first timer, adjust the first timing duration determined by the determining module to second timing duration, wherein
the second timing duration is greater than the first timing duration.

9. The apparatus according to claim 7, wherein
the determining module is further configured to determine third timing duration of a second timer based on a target parameter, wherein
the third timing duration is a period length of an evaluation period for quality evaluation of the first cell by the terminal, and the third timing duration is a time period for cell quality evaluation by the terminal; and
the target parameter comprises any one of the following: a motion state of the terminal, a quantity of times of reselecting the first cell by the terminal, and an environmental evaluation result of the terminal.

10. The apparatus according to claim 7, wherein the apparatus further comprises a start module, wherein
the start module is configured to start the second timer based on the first timing duration and the third timing duration; and
the start module is further configured to start the first timer at a moment when the terminal detects within the third timing duration that data starts to be transmitted, and monitor the retransmission feedback information within the first timing duration.

11. The apparatus according to claim 7, wherein
the execution module is further configured to reevaluate timing duration of a second timer after it is detected that the second timer times out;
the execution module is further configured to reevaluate the cell quality of the first cell; and
the execution module is further configured to redetermine timing duration of the first timer, wherein
the third timing duration is a period length of an evaluation period for quality evaluation of the first cell by the terminal, and the third timing duration is a time period for cell quality evaluation by the terminal; and
the target parameter comprises any one of the following: a motion state of the terminal, a quantity of times of reselecting the first cell by the terminal, and an environmental evaluation result of the terminal.

12. The apparatus according to claim 7, wherein the execution module is configured to, in a case that it is detected that the terminal is switched from the first cell to a second cell, reevaluate cell quality of the second cell, to obtain a second evaluation result, and redetermine timing duration of the first timer based on the second evaluation result.

13. An electronic device, comprising a processor and a memory, wherein the memory stores a program or instructions runnable on the processor, and when the program or the instructions are executed by the processor, the steps of the resource control method according to any one of claims 1 to 6 are implemented.

14. A readable storage medium, storing a program or instructions, wherein when the program or the instructions are executed by a processor, the steps of the resource control method according to any one of claims 1 to 6 are implemented.

15. A chip, comprising a processor and a communication interface, wherein the communication interface is coupled to the processor, and the processor is configured to run a program or instructions to implement the steps of the resource control method according to any one of claims 1 to 6.

16. A computer program product, stored in a non-volatile storage medium, wherein the computer program product is executed by at least one processor to implement the steps of the resource control method according to any one of claims 1 to 6.

17. An electronic device, configured to perform the steps of the resource control method according to any one of claims 1 to 6.
